# EUROPEAN PATENT APPLICATION

(11) **EP 2 362 621 A1**
(43) Date of publication of application: **31.08.2011**
(21) Application number: 09839038.8
(22) Date of filing: 19.03.2009
(51) Int. Cl.: H04M 3/42

(54) **METHOD, DEVICE, SYSTEM AND TERMINAL FOR PROCESSING COLORING RING BACK TONE**

(71) Applicant: Huawei Technologies Co., Ltd., Guangdong 518129 (CN)
(72) Inventor: ZHANG, Qianfeng, Longgang Shenzhen Guangdong 518129 (CN)
(74) Representative: Körber, Martin Hans
(86) International application number: PCT/CN2009/070898
(87) International publication number: WO 2010/105429

(57) **Abstract**

The embodiments of the present invention relate to method, apparatus, system and User Equipment (UE) for Color Ring Back Tone (CRBT) processing, the method including: transmitting a CRBT list acquisition request message that carries a CRBT list ID for a CRBT platform to match a CRBT list corresponding to the CRBT list ID, the CRBT list including CRBT IDs and CRBT names; and receiving the CRBT list returned according to the CRBT list acquisition request message. With the embodiments of the present invention, the UE can acquire a CRBT list of user-designated type. The operation is simple, which increases the efficiency of realizing CRBT service with the UE by the user.

## Description

### Field of the Invention

The present invention relates to the mobile communication technology field, and particularly, to method, apparatus, system and UE for Color Ring Back Tone (CRBT) processing.

### Background of the Invention

The CRBT service is a service customized by a called User Equipment (UE) to provide a calling UE a personalized ring back tone, such as an euphonious music or a greeting, to replace the common ring back tone service. After a user of the called UE subscribes for the CRBT service, the user can download and set various CRBTs by himself based upon his preference. Before downloading a certain CRBT, the user needs to browse a CRBT list of his preference, and determines the CRBT to be downloaded according to the CRBT list.

In the conventional technical solution, the user of the called UE needs to use a PC or the UE to start browser software, and access related CRBT portal websites through the browser, so as to acquire and browse related CRBT list. The operation is complex, which decreases the efficiency of realizing CRBT service with the UE by the user.

### Summary of the Invention

The embodiments of the present invention provide method, apparatus, system and UE for CRBT processing, so that the UE can acquire a CRBT list of user-designated type. The operation is simple, which increases the efficiency of realizing CRBT service with the UE by the user.

The embodiment of the present invention provide a method for CRBT processing, including: transmitting a CRBT list acquisition request message that carries a CRBT list ID for a CRBT platform to match a CRBT list corresponding to the CRBT list ID, which includes CRBT IDs and CRBT names; and receiving the CRBT list returned according to the CRBT list acquisition request message.

The embodiments of the present invention further provide a UE, including: a first transmitting module for transmitting a CRBT list acquisition request message that carries a CRBT list ID for a CRBT platform to match a CRBT list corresponding to the CRBT list ID, the CRBT list including CRBT IDs and CRBT n ames; and a first receiving module for receiving the CRBT list returned according to the CRBT list acquisition request message.

The embodiments of the present invention further provide an apparatus for CRBT processing, including: a fourth receiving module for receiving from a UE a CRBT list acquisition request message that carries a CRBT list ID; a first matching module for matching a CRBT list corresponding to the CRBT list ID, the CRBT list including CRBT IDs and CRBT names; and a fifth transmitting module for returning the CRBT list to the UE.

The embodiments of the present invention further provide a system for CRBT processing, including a CRBT platform connected to a UE and being able to communicate with the UE, for receiving from the UE a CRBT list acquisition request message that carries a CRBT list ID, matching a CRBT list corresponding to the CRBT list ID, the CRBT list including CRBT IDs and CRBT names, returning the CRBT list to the UE.

As can be seen from the above technical solutions, in the embodiments of the present invention a CRBT list acquisition request message that carries a CRBT list ID is transmitted to a CRBT platform with a UE. After receiving the CRBT list acquisition request message, the CRBT platform matches a CRBT list corresponding to the CRBT list ID, the CRBT list including CRBT IDs and CRBT names, and returns the matched CRBT list to the UE, so that the UE can acquire a CRBT list of user-designated type. The operation is simple, which increases the efficiency of realizing CRBT service with the UE by the user.

### Brief Description of the Drawings

In order to more clearly describe the technical solutions of the conventional art or the embodiments of the present invention, the drawings to be used in the descriptions of the conventional art and the embodiments are briefly introduced as follows. Apparently, the drawings described as follows are just some embodiments of the present invention, and a person skilled in the art can obtain other drawings based on those drawings without paying any creative effort.
Fig. 1 is a flowchart of a method for CRBT processing according to an embodiment of the present invention;
Fig. 2 is a flowchart of a method for CRBT processing according to another embodiment of the present invention;
Fig. 3 is a flowchart of a method for CRBT processing according to another embodiment of the present invention;
Fig. 4 is a flowchart of a method for CRBT processing according to another embodiment of the present invention;
Fig. 5 is a structural diagram of a UE according to an embodiment of the present invention;
Fig. 6 is a structural diagram of a UE according to another embodiment of the present invention;
Fig. 7 is a structural diagram of a UE according to still another embodiment of the present invention;
Fig. 8 is a structural diagram of an apparatus for CRBT processing according to an embodiment of the present invention;
Fig. 9 is a structural diagram of an apparatus for CRBT processing according to another embodiment of the present invention;
Fig. 10 is a structural diagram of a system for CRBT processing according to an embodiment of the present invention;
Fig. 11 is a structural diagram of a system for CRBT processing according to another embodiment of the present invention.

### Detailed Description of the Embodiments

The technical solutions of the embodiments of the present invention are clearly and completely described as follows in conjunction with the drawings of the embodiments. Apparently, the described embodiments are just some embodiments of the present invention, instead of all the embodiments. Any other embodiment obtained by a person skilled in the art based on the embodiments of the present invention without paying any creative effort, shall fall within the protection scope of the invention.

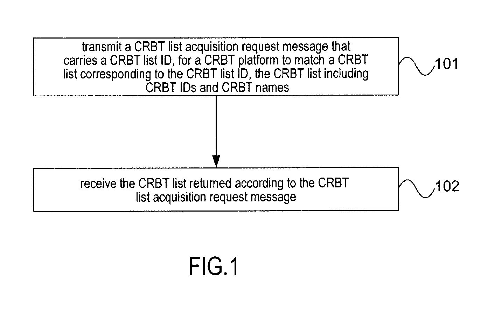

Fig. 1 is a flowchart of a method for CRBT processing according to an embodiment of the present invention, as shown in Fig. 1, the method for CRBT processing according to the embodiment may include the steps of:
Step 101: transmitting a CRBT list acquisition request message that carries a CRBT list ID for a CRBT platform to match a CRBT list corresponding to the CRBT list ID, the CRBT list including CRBT IDs and CRBT names;
Step 102: receiving the CRBT list returned according to the CRBT list acquisition request message.

In this embodiment, the UE can select a CRBT list ID corresponding to a user-designated type (e.g., hot CRBT, funny CRBT, monthly ranking, etc.) from a pre-acquired list of CRBT list IDs, and also can directly acquire a CRBT list ID inputted by the user. After acquiring the CRBT list ID, the UE transmits through an IP interface thereof, to the CRBT platform a CRBT list acquisition request message that carries the acquired CRBT list ID. After receiving the CRBT list acquisition request message, the CRBT platform matches a CRBT list corresponding to the CRBT list ID, the CRBT list including CRBT IDs and CRBT names, and returns the matched CRBT list to the UE, so that the UE can acquire a CRBT list of user-designated type. The operation is simple, which increases the efficiency of realizing CRBT service with the UE by the user.

To be noted, the above method for acquiring the list of CRBT list IDs can adopt the step for acquiring the CRBT list according to this embodiment, and the distinction is that the "CRBT list ID" in the request message is replaced by "CRBT list type ID".

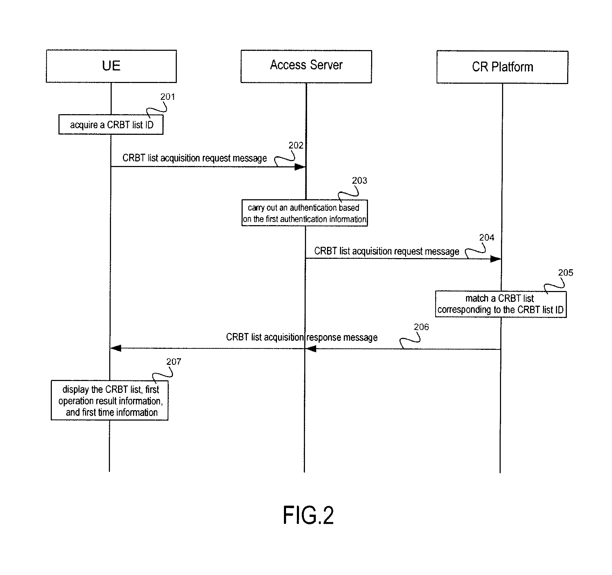

Fig. 2 is a flowchart of a method for CRBT processing according to another embodiment of the present invention, as shown in Fig. 2, the method for CRBT processing according to the present embodiment may include the steps of:
Step 201: A UE acquires a CRBT list ID.

In this embodiment, the UE can select a CRBT list ID corresponding to a user-designated type (e.g., hot CRBT, funny CRBT, monthly ranking, etc.) from a pre-acquired list of CRBT list IDs, and also can directly acquire a CRBT list ID inputted by the user.

Step 202: The UE transmits to an access server a CRBT list acquisition request (QueryContentList) message that carries a user ID, the CRBT list ID and first authentication information.

In this step, the first authentication information may include related parameters of the current system and temporary authentication information generated based on the related parameters, so as to be used as information for an authentication by the access server, e.g., the first authentication information may include a first session ID, a first time stamp of the current system and a first authenticator. The first authenticator is the temporary authentication information generated temporarily by the UE based on the first session ID and the first time stamp of the current system. The detailed steps may include:
the UE generates first information to be encrypted based on the user ID, the first session ID and the first time stamp of the current system; and
the UE encrypts the first information to be encrypted into the first authenticator by using an irreversible encryption algorithm pre-negotiated with the access server.

The parameter-related information carried in the CRBT list acquisition request message in this step may be as shown in Table 1, which gives parameters carried in the CRBT list acquisition request message.

**Table 1 Parameters Carried in the CRBT List Acquisition Request Message**

| No. | Parameter Name | Parameter Type | Description |
|---|---|---|---|
| 1 | user ID (userID) | String(TpString) | User's telephone number |
| 2 | session ID (sessionID) | String(TpString) | Session ID called by interface, exclusive ID |
| 3 | time stamp (timestamp) | String(TpString) | Current system time called by interface, format YYYYMMDDHHmmSS |
| 4 | authenticator (authenticator) | String(TpString) | Authenticator |
| 5 | CRBT list ID (ContentListID) | String(TpString) | CRBT list IDs of various types of CRBT lists Note: when a value is "000000", it represents an acquired list of CRBT list IDs |

Step 203: The access server receives the CRBT list acquisition request message and carries out an authentication based on the first authentication information.

When the first authentication information in this step includes related parameters of the current system and the temporary authentication information generated based on the related parameters, e.g., when the first authentication information includes the first session ID, the first time stamp of the current system and the first authenticator, the access server may generate information to be encrypted based on the user ID, the first session ID and the first time stamp of the current system, encrypt the information to be encrypted into an authenticator using an irreversible encryption algorithm pre-negotiated with the UE, and carry out an authentication by comparing the generated authenticator with the first authenticator carried in the CRBT list acquisition request message.

Step 204: When the authentication succeeds, the access server forwards the CRBT list acquisition request message to a CRBT platform.

Step 205: The CRBT platform receives the CRBT list acquisition request message, and matches a CRBT list corresponding to the CRBT list ID, the CRBT list including CRBT IDs and CRBT names.

Step 206: The CRBT platform returns through the access server, to the UE a CRBT list acquisition response message that carries the matched CRBT list corresponding to the CRBT list ID, a first result code and a second time stamp of the current system.

The parameter-related information carried in the CRBT list acquisition response message in this step may be as shown in Table 2, which gives parameters carried in the CRBT list acquisition response message.

**Table 2 Parameters Carried in the CRBT List Acquisition Response Message**

| No. | Parameter Name | Parameter Type | Description |
|---|---|---|---|
| 1 | result code (resultCode) | String(TpString) | Indicating success or failure of an acquisition |
| 2 | time stamp (timestamp) | String(TpString) | Current system time returned by interface, format: YYYYMMDDHHmmSS |
| 3 | CRBT list (contentList) | Array | Each array element in the CRBT list may include CRBT ID and CRBT name, optionally, may include other CRBT properties, as shown in Table 3; Note: in order to acquire a list of CRBT list IDs, each array element in the CRBT list may include CRBT list ID and CRBT list name. |

**Table 3 Parameters Included In Each Array Element In CRBT List**

| No. | Parameter Name | Parameter Type | Description |
|---|---|---|---|
| 1 | CRBT ID(contentID) | String(TpString) | CRBT ID of each CRBT Note: in order to acquire a list of CRBT list IDs, this parameter may be CRBT list ID of various types of CRBT lists |
| 2 | CRBT name (ContentName) | String(TpString) | CRBT name of each CRBT Note: in order to acquire a list of CRBT list IDs, this parameter may be CRBT list name of various types of CRBT lists |
| 3 | CRBT property list (ContentPropertyList) | Array | Each array element in the CRBT property list may include singer name, CRBT creation time, CRBT status, remark information, etc., see Table 4. |

**Table 4 Parameters Included In Each Array Element in CRBT Property List**

| No. | Parameter Name | Parameter Type | Description |
|---|---|---|---|
| 1 | name of Singer (artistName) | Sting(TpString) | name of Singer |
| 2 | sex of Singer (singerSex) | Integer type (TpInt) | Code corresponding to sex of singer may be: 1. Male 2. Female -1: Unknown |
| 3 | language of song (Language) | Sting(TpString) | language of Song |
| 4 | name of Category CRBT belongs to (categoryName) | Sting(TpString) | Name of Category CRBT belongs to |
| 5 | name of CP CRBT belongs to (cpName) | Sting(TpString) | Name of CP CRBT belongs to |
| 6 | CRBT price | Integer type (TpInt) | CRBT price, unit "cent" |
| 7 | CRBT ordering times (orderTimes) | Integer type (TpInt) | CRBT order times |
| 8 | CRBT setting Times (setTimes) | Integer type (TpInt) | CRBT setting Times |
| 9 | CRBT validity expiration date (toneValidDay) | Sting(TpString) | CRBT validity expiration date Format: yyyy-MM-dd |
| 10 | CRBT relative validity (relativeTime) | Integer type (TpInt) | CRBT relative validity |
| 11 | CRBT update time (uploadTime) | Sting(TpString) | CRBT update time |
| 12 | CRBT status (ContentStatus) | Sting(TpString) | CRBT status, may include loadable, unloadable, etc. |
| 13 | remark information (info) | Sting(TpString) | CRBT remark information, e.g., song description |

Step 207: The UE receives the CRBT list acquisition response message, and displays the CRBT list, first operation result information corresponding to the first result code, and first time information corresponding to the second time stamp.

In this embodiment, after acquiring the CRBT list ID, the UE transmits to the access server the CRBT list acquisition request message that carries the user ID, the first authentication information and the acquired CRBT list ID. After receiving the CRBT list acquisition request message, the access server forwards the CRBT list acquisition request message to the CRBT platform if an authentication based on the first authentication information succeeds. After receiving the CRBT list acquisition request message, the CRBT platform matches the CRBT list corresponding to the CRBT list ID, the CRBT list including CRBT related information such as CRBT IDs, CRBT names and CRBT properties, etc.; and returns through the access server, to the UE the CRBT list acquisition response message that carries the matched CRBT list, so that the UE can acquire the CRBT list carried in the CRBT list acquisition response message; and displays to the user CRBT IDs and CRBT names corresponding to the CRBT IDs in the CRBT list. Optionally, CRBT related information such as CRBT properties in the CRBT list can be further displayed. Therefore, the UE can acquire a CRBT list of user-designated type. The operation is simple, which increases the efficiency of realizing CRBT service with the UE by the user.

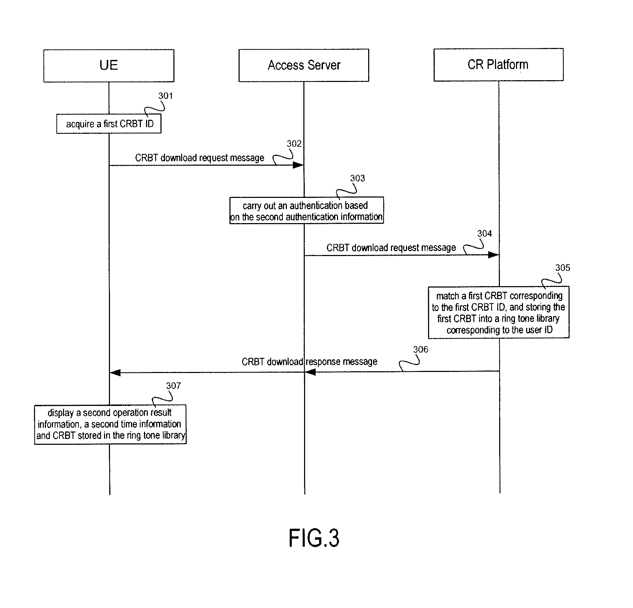

Fig. 3 is a flowchart of a method for CRBT processing according to still another embodiment of the present invention, as shown in Fig. 3 and compared with the previous embodiment, the method for CRBT processing according to the present embodiment may further include the following steps after step 207:
Step 301: The UE acquires a CRBT ID from the acquired CRBT list.

In this step, the UE can select a CRBT ID corresponding to a user selected CRBT from the acquired CRBT list.

Step 302: The UE transmits to an access server a CRBT download request (OrderContent) message that carries a user ID, the CRBT ID and second authentication information;
wherein, the user ID is a telephone number of the user, such as 135XXXXXXXX and 138XXXXXXXX, etc. In this step, the second authentication information may include related parameters of the current system and temporary authentication information generated temporarily based on the related parameters, so as to be used as information for an authentication by the access server, e.g., the second authentication information may include a second session ID, a third time stamp of the current system and a second authenticator. The second authenticator is the temporary authentication information generated temporarily by the UE based on the second session ID and the third time stamp of the current system. The detailed steps may include the following:
the UE generates second information to be encrypted based on the user ID, the second session ID and the third time stamp of the current system; and
the UE encrypts the second information to be encrypted into the second authenticator by using an irreversible encryption algorithm pre-negotiated with the access server.

The parameter-related information carried in the CRBT download request message in this step is shown in Table 5, which gives parameters carried in the CRBT list download acquisition request message.

**Table 5 Parameters Carried In CRBT Download Request Message**

| No. | Parameter Name | Parameter Type | Description |
|---|---|---|---|
| 1 | user ID(userID) | String(TpString) | User's telephone number |
| 2 | session ID (sessionID) | String(TpString) | Session ID called by interface, exclusive ID |
| 3 | time stamp (timestamp) | String(TpString) | Current system time called by interface, format: YYYYMMDDHHmmSS; |
| 4 | authenticator (authenticator) | String(TpString) | Authenticator |
| 5 | CRBT ID (ContentID) | String(TpString) | CRBT ID |

Step 303: The access server receives the CRBT download request message and carries out an authentication based on the second authentication information.

When the second authentication information in this step includes related parameters of the current system and the temporary authentication information generated temporarily based on the related parameters, e.g., when the second authentication information includes the second session ID, the third time stamp of the current system and the second authenticator, the access server may generate information to be encrypted based on the user ID, the second session ID and the third time stamp of the current system, encrypt the information to be encrypted into an authenticator using an irreversible encryption algorithm pre-negotiated with the UE, and carry out an authentication by comparing the generated authenticator with the second authenticator carried in the CRBT download request message.

Step 304: When the authentication succeeds, the access server forwards the CRBT download request message to the CRBT platform.

Step 305: The CRBT platform receives the CRBT download request message, matches a CRBT corresponding to the CRBT ID, and stores the CRBT into a ring tone library corresponding to the user ID.

The ring tone library is a storage area provided by the operator to a user of UE to store the downloaded CRBT, and generally, data of the ring tone library is stored with database.

Step 306: The CRBT platform returns through the access server, to the UE a CRBT download response message that carries a second result code and a fourth time stamp of the current system.

The parameter-related information carried in the CRBT download response message in this step may be as shown in Table 6, which gives parameters carried in the CRBT download response message.

**Table 6 Parameters Carried In CRBT Download Response Message**

| No. | Parameter Name | Parameter Type | Description |
|---|---|---|---|
| 1 | result code (resultCode) | String(TpString) | Indicating success or failure of a download |
| 2 | time stamp (timestamp) | String(TpString) | Current system time returned by interface, format: YYYYMMDDHHmmSS |
| 3 | Personal CRBT library (PersonalContentLib) | Array | each array element in the personal ring tone library is all the CRBT information downloaded by a UE user corresponding to the user ID, may include CRBT ID and CRBT name |

Step 307: The UE receives the CRBT download response message, and displays a second operation result information corresponding to the second result code, a second time information corresponding to the fourth time stamp, and CRBT stored in the ring tone library.

In this embodiment, the UE acquires the CRBT ID corresponding to the CRBT to be downloaded from the acquired CRBT list according to the user's preference, transmits to the access server the CRBT download request message that carries the user ID, the second authentication information and the acquired CRBT ID. After receiving the CRBT download request message, the access server forwards the CRBT download request message to the CRBT platform if an authentication based on the second authentication information succeeds. After receiving the CRBT download request message, the CRBT platform matches the CRBT corresponding to the CRBT ID, stores the CRBT into the ring tone library corresponding to the user ID, and returns through the access server, to the UE the CRBT download response message, so that the CRBT download can be completed directly through the UE, and the UE can download CRBT according to the acquired CRBT list of user-designated type. The operation is simple, which increases the efficiency of CRBT download.

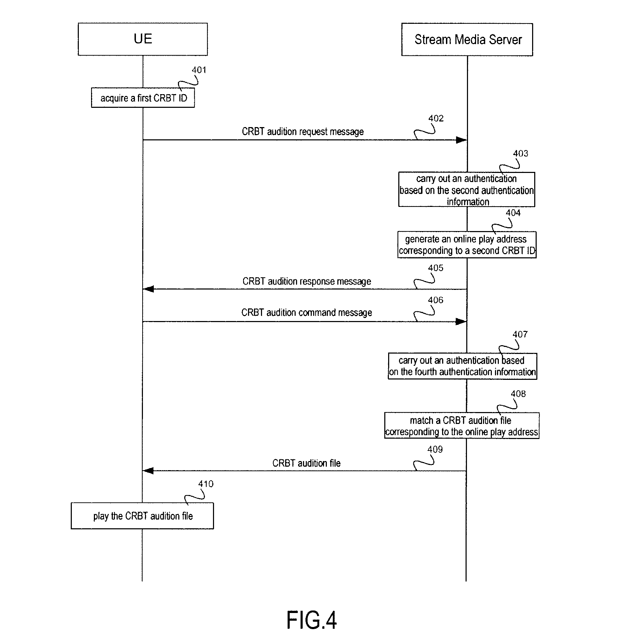

Fig. 4 is a flowchart of a method for CRBT processing according to yet another embodiment of the present invention, as shown in Fig. 4 and compared with the above two embodiments, the method for CRBT processing in the present embodiment may further include the following steps after step 207:
Step 401: The UE acquires a CRBT ID from the acquired CRBT list.

In this step, the UE can select a CRBT ID corresponding to a user selected CRBT, from the acquired CRBT list.

Step 402: The UE transmits to a stream media server a CRBT audition request (ListenContent) message that carries a user ID, the CRBT ID and a third authentication information.

In this step, the third authentication information may include related parameters of the current system and temporary authentication information generated temporarily based on the related parameters, so as to be used as information for an authentication by the stream media server, e.g., the third authentication information may include a third session ID, a fifth time stamp of the current system and a third authenticator. The third authenticator is the temporary authentication information generated temporarily by the UE based on the third session ID and the fifth time stamp of the current system. The detailed steps may include the following:
the UE generates third information to be encrypted based on the user ID, the third session ID and the fifth time stamp of the current system; and
the UE encrypts the third information to be encrypted into the third authenticator using an irreversible encryption algorithm pre-negotiated with the stream media server.

The parameter-related information carried in the CRBT audition request message in this step may be as shown in Table 7, which gives parameters carried in the CRBT audition request message.

**Table 7 Parameters Carried In CRBT Audition Request Message**

| No. | Parameter Name | Parameter Type | Description |
|---|---|---|---|
| 1 | user ID (userID) | String(TpString) | User's telephone number |
| 2 | session ID (sessionID) | String(TpString) | Session ID called by interface, exclusive ID |
| 3 | time stamp (timeStamp) | String(TpString) | Current system time called by interface, format: YYYYMMDDHHmmSS; |
| 4 | authenticator (authenticator) | String(TpString) | Authenticator |
| 5 | CRBT ID (ContentID) | String(TpString) | CRBT ID |

Step 403: The stream media server receives the CRBT audition request message and carries out an authentication based on the third authentication information.

When the third authentication information in this step includes related parameters of the current system and the temporary authentication information generated temporarily based on the related parameters, e.g., when the third authentication information includes the third session ID, the fifth time stamp of the current system and the third authenticator, the stream media server may generate information to be encrypted based on the user ID, the third session ID and the fifth time stamp of the current system, encrypt the information to be encrypted into an authenticator using an irreversible encryption algorithm pre-negotiated with the UE, and carry out an authentication by comparing the generated authenticator with the third authenticator carried in the CRBT audition request message.

Step 404: When the authentication succeeds, the stream media server generates an online play address corresponding to the CRBT ID, according to the user ID and the CRBT ID.

In this step, the online play address may include an IP address of the stream media server, an IP port of the stream media server, a temporary IP address distributed to the UE, a user ID, a fourth authentication information, and a file ID of a CRBT audition file corresponding to the CRBT ID. In this step, the fourth authentication information may include related parameters of the current system and temporary authentication information generated temporarily based on the related parameters, so as to be carried by the UE in a subsequently sent CRBT audition command message and used as information for an authentication by the stream media server, e.g., the fourth authentication information may include a CRBT ID, a sixth time stamp of the current system and a fourth authenticator. The fourth authenticator is the temporary authentication information generated temporarily by the stream media server based on the CRBT ID and the sixth time stamp of the current system. The detailed steps may include the following:
the stream media server generates a fourth information to be encrypted based on the user ID, the CRBT ID and the sixth time stamp of the current system;
the stream media server encrypts the fourth information to be encrypted into the fourth authenticator using pre-negotiated irreversible encryption algorithm.
Step 405: The stream media server returns to the UE a CRBT audition response message that carries the online play address.

The parameter-related information carried in the CRBT audition response message in this step is shown in Table 8, which gives parameters carried in the CRBT audition response message.

**Table 8 Parameters Carried In CRBT Audition Response Message**

| No. | Parameter Name | Parameter Type | Description |
|---|---|---|---|
| 1 | result code (resultCode) | String(TpString) | Indicating success or failure of an acquisition of online play address |
| 2 | time stamp (timeStamp) | String(TpString) | Current system time returned by interface, Format: YYYYMMDDHHmmSS |
| 3 | online play address (onlineplayerAdress) | Array | Online play address for online CRBT audition, it may include IP address of stream media server, IP port of stream media server, temporary IP address distributed to the UE, user ID, authentication information and file ID of CRBT audition file |

Step 406: The UE receives the CRBT audition response message, and transmits to the stream media server a CRBT audition command message that carries the online play address.

Step 407: The stream media server receives the CRBT audition command message, and carries out an authentication according to the fourth authentication information in the online play address.

When the fourth authentication information in this step includes related parameters of the current system and the temporary authentication information generated temporarily based on the related parameters, e.g., when the fourth authentication information includes the CRBT ID, the sixth time stamp of the current system and the fourth authenticator, the stream media server may generate information to be encrypted based on the user ID, the CRBT ID and the sixth time stamp of the current system, encrypt the information to be encrypted into an authenticator using a pre-negotiated irreversible encryption algorithm, and carry out an authentication by comparing the generated authenticator with the fourth authenticator carried in the online play address.

Step 408: When the authentication succeeds, the stream media server matches a CRBT audition file corresponding to the online play address, and reads the CRBT audition file.

Wherein, the CRBT audition file is a CRBT file stored in the stream media server and associated with the CRBT file used during a CRBT calling process; the file content data of the CRBT audition file may be the whole piece or a fragment of the CRBT.

In this step, the authentication may further include the following:

The stream media server compares the current system time with the sixth time stamp, and if a predetermined valid duration is not exceeded, the authentication succeeds.

Step 409: The stream media server returns to the UE the CRBT audition file.

Step 410: The UE receives and plays the CRBT audition file.

In this step, after receiving a byte stream of the CRBT audition file, the UE converts the byte stream into a play signal and plays the play signal, wherein the play signal may include multimedia signal such as audio signal, video signal and image signal, etc.

In this embodiment, the UE acquires the CRBT ID corresponding to the CRBT to be auditioned from the acquired CRBT list according to the user's preference, transmits to the stream media server the CRBT audition request message that carries the user ID, the third authentication information and the acquired CRBT ID. After receiving the CRBT audition request message, if an authentication based on the third authentication information succeeds, the stream media server generates the online play address that carries the fourth authentication information and is corresponding to the CRBT ID, and returns to the UE the CRBT audition response message that carries the online play address. After acquiring the online play address of the CRBT to be auditioned by the user, the UE transmits to the stream media server the CRBT audition command message that carries the online play address. After receiving the CRBT audition command message, if an authentication based on the fourth authentication information succeeds, the stream media server matches the CRBT audition file corresponding to the online play address, and returns to the UE the CRBT audition file, so that the CRBT audition can be completed directly with the UE, and the UE can complete a CRBT audition according to the acquired CRBT list of user-designated type, and the operation is simple.

Further, in another embodiment of the present invention, a CRBT audition may be completed directly with the UE firstly, and then the download of the auditioned CRBT is completed. That is to say, the UE acquires a CRBT ID from the acquired CRBT list firstly, and transmits to the stream medium server a CRBT audition request message that carries the CRBT ID. After acquiring an online play address of the CRBT ID generated by the stream media server, the UE transmits to the stream media server a CRBT audition command message that carries the online play address, so as to acquire a CRBT audition file corresponding to the online play address and matched by the stream media server. After playing the CRBT audition file, the UE transmits to the CRBT platform a CRBT download request message that carries the CRBT ID. After receiving the CRBT download request message, the CRBT platform matches a CRBT corresponding to the CRBT ID, i.e., a complete CRBT corresponding to the CRBT audition file, and stores the CRBT into a ring tone library corresponding to the user ID, so that CRBT audition and download can be completed directly with the UE, and the UE can download CRBT according to the acquired CRBT list of user-designated type. The operation is simple, which increases the efficiency of CRBT download.

To be noted, the previous method embodiments are all described as combinations of series of actions for the purpose of briefness, but persons killed in the art will know that the present invention is not limited by the sequences of the described actions, because according to the present invention, some steps may be executed in other sequence or at the same time. Secondly, a persons killed in the art will also know that the described embodiments are just preferred embodiments, and the concerned actions and modules are not certainly necessary.

In the above embodiments, the descriptions of the respective embodiment has different emphasis, and with respect to a part that is not detailedly described in a certain embodiment, please see related descriptions in other embodiments.

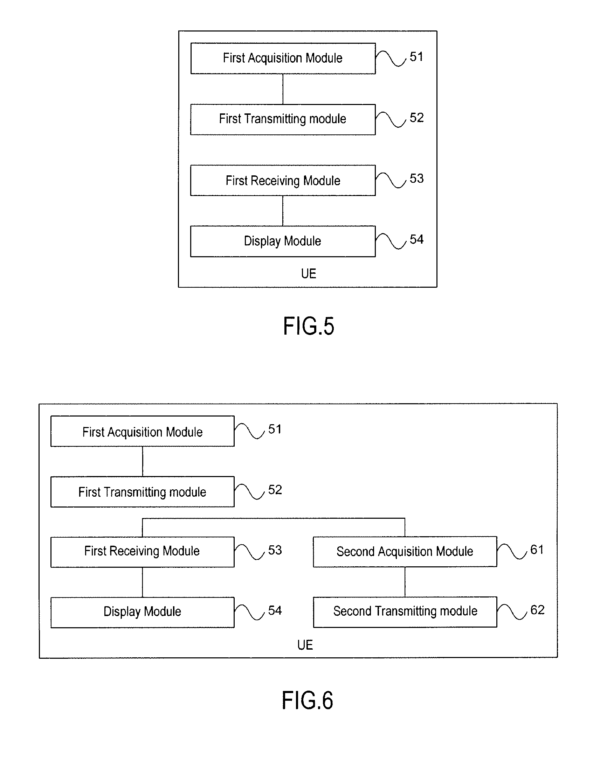

Fig. 5 is a structural diagram of a UE according to an embodiment of the present invention, as shown in Fig. 5, the UE according to the present embodiment may include a first transmitting module 52 and a first receiving module 53. Wherein, the first transmitting module 52 transmits to a CRBT platform a CRBT list acquisition request message that carries a CRBT list ID for the CRBT platform to match a CRBT list corresponding to the CRBT list ID; the first receiving module 53 acquires the CRBT list matched and returned by the CRBT platform according to the CRBT list acquisition request message, and the CRBT list includes CRBT IDs and CRBT names.

The functions of the UE in the above methods according to the embodiments of the present invention can all be implemented by the UE according to the present embodiment.

Further, the UE according to the present embodiment may further include a first acquisition module 51 for acquiring the CRBT list ID. In order to reveal the CRBT list acquired by the first receiving module 53 to the user, the UE according to the present embodiment may further include a display module 54 for displaying the CRBT list acquired by the first receiving module 53.

In this embodiment, the first acquisition module can select a CRBT list ID corresponding to a user-designated type (e.g., hot CRBT, funny CRBT, monthly ranking, etc.) from a pre-acquired list of CRBT list IDs, and also can directly acquire a CRBT list ID inputted by the user. After the first acquisition module acquiring the CRBT list ID, the first transmitting module transmits to the CRBT platform a CRBT list acquisition request message that carries the CRBT list ID acquired by the first acquisition module. After receiving the CRBT list acquisition request message, the CRBT platform matches a CRBT list corresponding to the CRBT list ID, the CRBT list including CRBT IDs and CRBT names, and returns the matched CRBT list to the first receiving module, so that the first receiving module can acquire the CRBT list, and finally, the display module displays the CRBT ID and corresponding CRBT name in the CRBT list to the user. Therefore the UE can acquire a CRBT list of user-designated type. The operation is simple, which increases the efficiency of realizing CRBT service with the UE by the user.

Fig. 6 is a structural diagram of a UE according to another embodiment of the present invention, as shown in Fig. 6 and compared with the previous one embodiment, the UE according to the present embodiment may further include a second acquisition module 61 and a second transmitting module 62, wherein, the second acquisition module 61 acquires a CRBT ID from the CRBT list acquired by the first receiving module 53; the second transmitting module 62 transmits to the CRBT platform a CRBT download request message that carries a user ID and the CRBT ID acquired by the second acquisition module 61 for the CRBT platform to match a CRBT corresponding to the CRBT ID, and store the CRBT into a ring tone library corresponding to the user ID.

In this embodiment, the second acquisition module acquires a CRBT ID corresponding to the CRBT to be downloaded from the CRBT list acquired by the first receiving module according to the user's preference; the second transmitting module transmits to the CRBT platform a CRBT download request message that carries a user ID and the CRBT ID acquired by the second acquisition module. After receiving the CRBT download request message, the CRBT platform matches a CRBT corresponding to the CRBT ID, and stores the CRBT into a ring tone library corresponding to the user ID, so that the CRBT download can be completed directly with the UE, and the UE can download CRBT according to the acquired CRBT list of user-designated type. The operation is simple, which increases the efficiency of CRBT download.

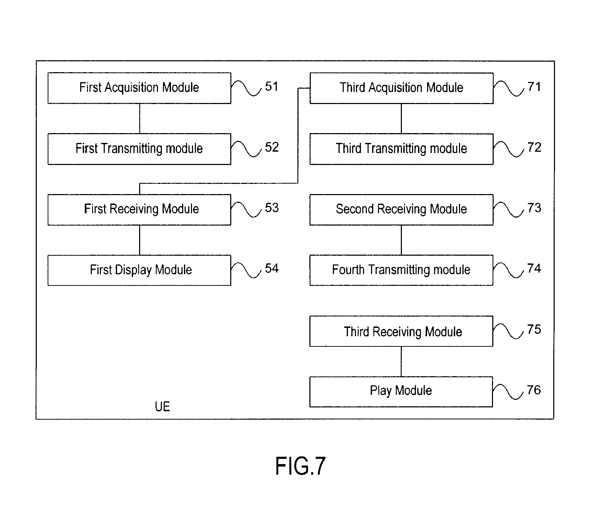

Fig. 7 is a structural diagram of a UE according to still another embodiment of the present invention, as shown in Fig. 7 and compared with the above two embodiments, the UE according to the present embodiment may further include a third acquisition module 71, a third transmitting module 72, a second receiving module 73, a fourth transmitting module 74, a third receiving module 75 and a play module 76, where the third acquisition module 71 acquires a CRBT ID from the CRBT list acquired by the first receiving module 53; the third transmitting module 72 transmits to the stream media server a CRBT audition request message that carries the CRBT ID acquired by the third acquisition module 71 for the stream media server to generate an online play address corresponding to the CRBT ID; the second receiving module 73 receives the online play address returned by the stream media server according to the CRBT audition request message; the fourth transmitting module 74 transmits to the stream media server a CRBT audition command message that carries the online play address for the stream media server to match a CRBT audition file corresponding to the online play address; the third receiving module 75 receives the CRBT audition file returned by the stream media server according to the CRBT audition command message; and the play module 76 plays the CRBT audition file.

In this embodiment, the third acquisition module acquires a CRBT ID corresponding to the CRBT to be auditioned from the CRBT list acquired by the first receiving module according to the user's preference; the third transmitting module transmits to the stream media server a CRBT audition request message that carries the CRBT ID acquired by the third acquisition module. After receiving the CRBT audition request message, the stream media server generates an online play address corresponding to the CRBT ID, and returns the online play address to the second receiving module. After the second receiving module acquires the online play address of the CRBT to be auditioned by the user, the fourth transmitting module transmits to the stream media server a CRBT audition command message that carries the online play address. After receiving the CRBT audition command message, the stream media server matches a CRBT audition file corresponding to the online play address, and returns a byte stream of the CRBT audition file to the third receiving module, and finally, the play module converts the byte stream into an audio play signal and plays the audio play signal, so that the CRBT audition can be completed directly with the UE, and a CRBT audition can be completed according to the acquired CRBT list of user-designated type, and the operation is simple.

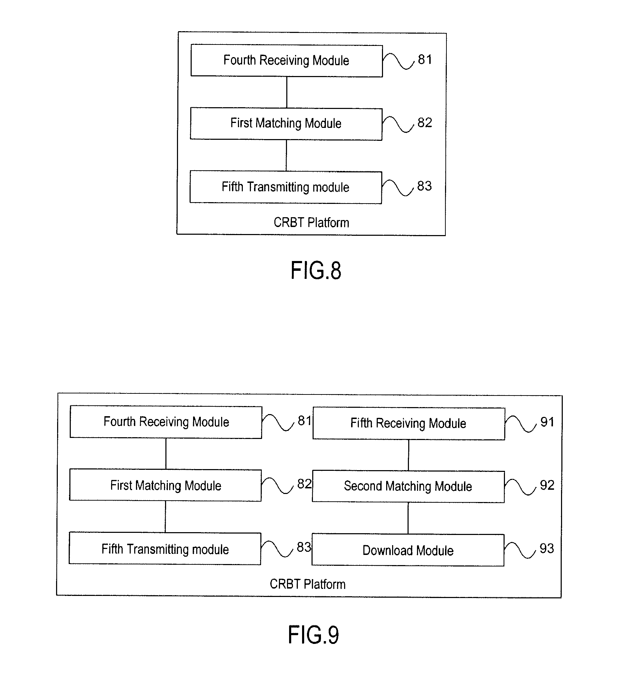

Fig. 8 is a structural diagram of an apparatus for CRBT processing according to an embodiment of the present invention, as shown in Fig. 8, the apparatus for CRBT processing according to the present embodiment may include a fourth receiving module 81, a first matching module 82, and a fifth transmitting module 83. Wherein, the fourth receiving module 81 receives a CRBT list acquisition request message transmitted from the UE. The CRBT list acquisition request message that carries CRBT list ID; the first matching module 82 matches a CRBT list corresponding to the CRBT list ID, the CRBT list including CRBT IDs and CRBT names; and the fifth transmitting module 83 returns to the UE the CRBT list matched by the first matching module 82.

The functions of the CRBT platform in the above methods according to the embodiments of the present invention can all be implemented by the apparatus for CRBT processing according to the present embodiment.

In this embodiment, after the fourth receiving module receives the CRBT list acquisition request message, the first matching module matches a CRBT list corresponding to the CRBT list ID, the CRBT list including CRBT IDs and CRBT names, and the fifth transmitting module returns to the UE the CRBT list matched by the first matching module, so that the UE can acquire the CRBT of user-designated type. The operation is simple, which increases the efficiency of realizing CRBT service with the UE by the user.

Fig. 9 is a structural diagram of an apparatus for CRBT processing according to another embodiment of the present invention, as shown in Fig. 9 and compared with the previous embodiment, the apparatus for CRBT processing according to the present embodiment may further include a fifth receiving module 91, a sec ond matching module 92 and a download module 93, where the fifth receiving module 91 receives a CRBT download request message that carries a user ID and a CRBT ID acquired by the UE from the acquired CRBT list; the second matching module 92 matches a CRBT corresponding to the CRBT ID; and the download module 93 stores the CRBT into a ring tone library corresponding to the user ID.

In this embodiment, after the fifth receiving module receives the CRBT download request message, the second matching module matches a CRBT corresponding to the CRBT ID, and the download module stores the CRBT into a ring tone library corresponding to the user ID, so that the CRBT download can be completed directly with the UE, and the UE can download CRBT according to the acquired CRBT list of user-designated type. The operation is simple, which increases the efficiency of CRBT download.

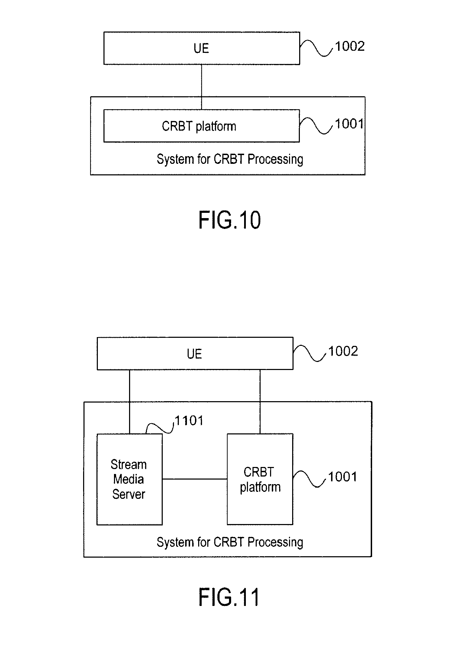

Fig. 10 is a structural diagram of a system for CRBT processing according to an embodiment of the present invention, as shown in Fig. 10, the system for CRBT processing according to the present embodiment may include a CRBT platform 1001 connected to a UE 1002 and being able to communicate with the UE, for receiving from the UE 1002 a CRBT list acquisition request message that carries a CRBT list ID, matching a CRBT list corresponding to the CRBT list ID, the CRBT list carrying CRBT IDs and CRBT names, and returning the CRBT list to the UE 1002.

The functions of the CRBT platform in the above methods according to the embodiments of the present invention can all be implemented by the CRBT platform in the system for CRBT processing according to the present embodiment.

Further, the CRBT platform 1001 according to the present embodiment may be adapted for receiving from the UE 1002 a CRBT download request message that carries a user ID and a CRBT ID acquired by the UE 1002 from the acquired CRBT list, matching a CRBT corresponding to the CRBT ID, and storing the CRBT into a ring tone library corresponding to the user ID.

Fig. 11 is a structural diagram of a system for CRBT processing according to another embodiment of the present invention, as shown in Fig. 11, the system for CRBT processing according to the present embodiment may further include a stream media server 1101 connected to the UE 1002 and the CRBT platform 1001 and being able to communicate with the UE and the CRBT platform, respectively, for receiving from the UE 1002 a CRBT audition request message that carries a CRBT ID acquired by the UE 1002 from the CRBT list, generating an online play address corresponding to the CRBT ID, and returning the online play address to the UE 1002; receiving from the UE 1002 a CRBT audition command message that carries the online play address, matching a CRBT audition file corresponding to the online play address, and returning the CRBT audition file to the UE 1002.

To be noted, in the present embodiment, the stream media server 1101 may be arranged in the CRBT platform 1001 and integrated therewith.

In this embodiment, the UE transmits to the CRBT platform a CRBT list acquisition request message that carries a CRBT list ID. After receiving the CRBT list acquisition request message, the CRBT platform matches a CRBT list corresponding to the CRBT list ID, CRBT list including CRBT IDs and CRBT names, and returns the matched CRBT list to the UE. Therefore, the UE can acquire the CRBT list of user-designated type. The operation is simple, which increases the efficiency of realizing CRBT service with the UE by the user.

A person skilled in the art will appreciate that all or partial steps of the above method embodiments are implementable by instructing related hardware through a program that can be stored in a computer readable storage medium, and when the program is executed, the steps of the above method embodiments will be carried out. The storage medium may include nay medium that can store program code, such as ROM, RAM, magnetic disk and optical disk, etc.

Finally to be noted, the above embodiments are just used to describe the technical solutions of the present invention, and are not limitations thereto. Although the present invention is described in details in conjunction with the above embodiments, a person skilled in the art will appreciate that, the technical solutions of the above embodiments can still be modified, or some technical features thereof can be equivalently substituted, while these modifications or substitutions do not cause the essences of corresponding technical solutions to deviate from the spirit and range of the technical solutions of the embodiments of the present invention.

## Claims

1. A method for Color Ring Back Tone (CRBT) processing, comprising:
transmitting a CRBT list acquisition request message that carries a CRBT list ID for a CRBT platform to match a CRBT list corresponding to the CRBT list ID, the CRBT list comprising CRBT IDs and CRBT names; and
receiving the CRBT list returned according to the CRBT list acquisition request message.

2. The method according to claim 1, wherein after receiving the CRBT list returned according to the CRBT list acquisition request message, the method further comprises:
acquiring a CRBT ID from the CRBT list; and
transmitting a CRBT download request message that carries a user ID and the CRBT ID for the CRBT platform to match a CRBT corresponding to the CRBT ID, and store the CRBT into a ring tone library corresponding to the user ID.

3. The method according to claim 1, wherein after receiving the CRBT list returned according to the CRBT list acquisition request message, the method further comprises:
acquiring a CRBT ID from the CRBT list;
transmitting a CRBT audition request message that carries the CRBT ID for a stream media server to generate an online play address corresponding to the CRBT ID;
receiving the online play address returned according to the CRBT audition request message;
transmitting a CRBT audition command message that carries the online play address for the stream media server to match a CRBT audition file corresponding to the online play address;
receiving the CRBT audition file returned according to the CRBT audition command message; and
playing the CRBT audition file.

4. The method according to claim 3, wherein after playing the CRBT audition file, the method further comprising: transmitting a CRBT download request message that carries a user ID and the CRBT ID for the CRBT platform to match a CRBT corresponding to the CRBT ID, and store the CRBT into a ring tone library corresponding to the user ID.

5. The method according to any of claims 1 to 4, wherein before transmitting CRBT list acquisition request message, the method further comprises: acquiring the CRBT list ID.

6. The method according to any of claims 1 to 4, wherein after receiving the CRBT list returned according to the CRBT list acquisition request message, the method further comprises: displaying the CRBT list.

7. A User Equipment (UE), the UE comprising:
a first transmitting module, configured to transmit a Color Ring Back Tone (CRBT) list acquisition request message that carries a CRBT list ID for a CRBT platform to match a CRBT list corresponding to the CRBT list ID, the CRBT list comprising CRBT IDs and CRBT names; and
a first receiving module, configured to receive the CRBT list returned according to the CRBT list acquisition request message.

8. The UE according to claim 7, wherein the UE further comprises:
a second acquiring module, configured to acquire a CRBT ID from the CRBT list; and
a second transmitting module, configured to transmit a CRBT download request message that carries a user ID and the CRBT ID for the CRBT platform to match a CRBT corresponding to the CRBT ID, and store the CRBT into a ring tone library corresponding to the user ID.

9. The UE according to claim 7 or 8, wherein the UE further comprises:
a third acquiring module, configured to acquire a CRBT ID from the CRBT list;
a third transmitting module, configured to transmit a CRBT audition request message that carries the CRBT ID for a stream media server to generate an online play address corresponding to the CRBT ID;
a second receiving module, configured to receive the online play address returned according to the CRBT audition request message;
a fourth transmitting module, configured to transmit a CRBT audition command message that carries the online play address for the stream media server to match a CRBT audition file corresponding to the online play address;
a third receiving module, configured to receive the CRBT audition file returned according to the CRBT audition command message; and
a playing module, configured to play the CRBT audition file.

10. An apparatus for Color Ring Back Tone (CRBT) processing, wherein the apparatus comprises:
a fourth receiving module, configured to receives from a UE a CRBT list acquisition request message that carries a CRBT list ID;
a first matching module, configured to match a CRBT list corresponding to the CRBT list ID, the CRBT list comprising CRBT IDs and CRBT names; and
a fifth transmitting module, configured to return the CRBT list to the UE.

11. The apparatus according to claim 10, wherein the apparatus further comprises:
a fifth receiving module, configured to receive from the UE, a CRBT download request message that carries a user ID and a CRBT ID acquired by the UE from the CRBT list;
a second matching module, configured to match a CRBT corresponding to the CRBT ID; and
a downloading module, configured to store the CRBT into a ring tone library corresponding to the user ID.

12. A system for Color Ring Back Tone (CRBT) processing, wherein the system comprises:
a CRBT platform connected to a UE and being able to communicate with the UE, configured to receive from the UE a CRBT list acquisition request message that carries a CRBT list ID, match a CRBT list corresponding to the CRBT list ID, the CRBT list comprising CRBT IDs and CRBT names, and return the CRBT list to the UE.

13. The system for CRBT processing according to claim 12, wherein the CRBT platform is further configured to receive from the UE, a CRBT download request message that carries a user ID and a CRBT ID acquired by the UE from the CRBT list, match a CRBT corresponding to the CRBT ID, and store the CRBT into a ring tone library corresponding to the user ID.

14. The system for CRBT processing according to claim 12 or 13, wherein the CRBT platform further comprises:
a stream media server connected to the UE respectively and the CRBT platform and being able to communicate with the UE and the CRBT platform, configured to receive from the UE a CRBT audition request message that carries a CRBT ID acquired by the UE from the CRBT list, generate an online play address corresponding to the CRBT ID, return the online play address to the UE, and receive from the UE a CRBT audition command message that carries the online play address, match a CRBT audition file corresponding to the online play address, and return the CRBT audition file to the UE.
